Europäisches Patentamt

(19) European Patent Office

Office européen des brevets

(11) Publication number : **0 367 118 B1**

(12) **EUROPEAN PATENT SPECIFICATION**

(45) Date of publication of patent specification :
02.01.92 Bulletin 92/01

(51) Int. Cl.⁵ : **F16G 3/06**

(21) Application number : **89119928.3**

(22) Date of filing : **26.10.89**

(54) **Toothed-belt fixing mechanism.**

(30) Priority : **29.10.88 JP 141742/88 U**
**29.10.88 JP 141743/88 U**

(43) Date of publication of application :
**09.05.90 Bulletin 90/19**

(45) Publication of the grant of the patent :
**02.01.92 Bulletin 92/01**

(84) Designated Contracting States :
**DE FR GB NL**

(56) References cited :
**DE-C- 114 719**
**DE-C- 803 689**
**FR-A- 373 712**

(56) References cited :
**US-A- 4 348 974**
**PATENT ABSTRACTS OF JAPAN, vol. 7, no. 79**
**(M-204)[1224], 31st March 1983; & JP-A-58**
**5554 (YUNITSUTA) 12-01-1983**

(73) Proprietor : **MITA INDUSTRIAL CO., LTD.**
**2-28, 1-chome, Tamatsukuri Chuo-ku**
**Osaka 540 (JP)**

(72) Inventor : **Okazaki, Noritaka**
**21-6, Ishihara-cho**
**Kadoma-City Osaka (JP)**

(74) Representative : **TER MEER - MÜLLER -**
**STEINMEISTER & PARTNER**
**Mauerkircherstrasse 45**
**W-8000 München 80 (DE)**

## Description

The present invention relates to a toothed-belt fixing mechanism. The term "fixing mechanism" is understood to designate a mechanism for fixing one end portion of the toothed-belt as well as a mechanism for connecting both end portions of the toothed-belt with each other to form an endless belt.

Toothed-belts have been used in various kinds of movable member-driving apparatus requiring an appointed timing, such as optical system-driving apparatus in an optical system travel type copying machine, printing head-driving apparatus in a printer, driving apparatus of an automatic door and travelling-driving apparatus of a robot car truck.

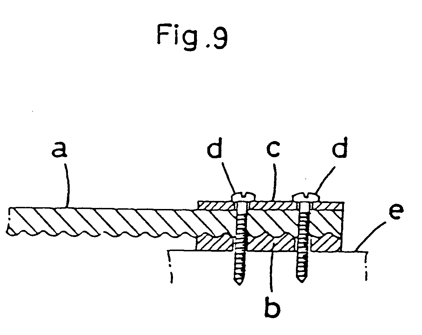

When one end portion of the toothed-belt is fixed, as shown in Fig. 9, the end portion of the toothed-belt (a) is put between an uneven plate (b) having a plurality of teeth engaging with teeth of said belt (a) and a flat plate (c) and fixedly mounted on a stationary portion (e), such as the body of the copying machine, by means of screws (d) passing through the members (a), (b), (c).

The above described conventional toothed-belt has shown the following problems.

When the toothed-belt (a) is to be fixed, it is necessary to fix it with a certain tension, but in the fixing method as shown it has been remarkably difficult to fix the toothed-belt (a) with an appropriate tension.

Accordingly, for example, in the case of an apparatus, such as an optical system-driving apparatus in a large-sized optical system travel type copying machine, in which a central movable member is driven by means of a pair of toothed-belts disposed on both sides of the movable member, it is difficult to balance the tensions on the toothed-belts positioned on both sides of the movable member. As a result, it was not possible in some cases to move the member smoothly.

In addition, also in the case where it is necessary to regulate the tension on the belt again due to the extension of the belt, the regulating operation has been difficult.

On the other hand, for example, in the production of a long endless toothed-belt such as an endless toothed-belt used in a driving apparatus of an automatic door, both end portions of the toothed-belt are connected with each other to form an endless belt in many cases.

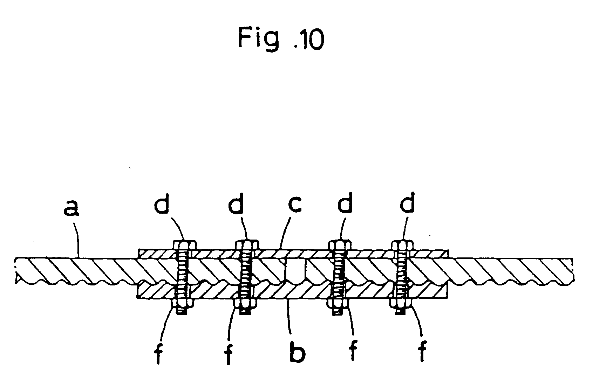

In such cases, as shown in Fig. 10, both end portions of the toothed-belt (a) have been put between an uneven plate (b) provided with teeth engaging with teeth of said belt (a) and a flat plate (c) and have been fixed by tightening bolts (d) passing through said members (a), (b) and (c) and screwed into nuts to connect both end portions of the toothed-belt (a) with each other thereby forming an endless belt.

Another conventional example of a fixing mechanism for both ends of a toothed-belt has been disclosed in DE-C-803689. There, two guide members are held together by a bolt in spaced-apart relationship, and a wedge-shaped toothed member is inserted between the guide members so as to form gaps with the respective guide members. The ends of the toothed-belt are drawn around the guide members, so that their teeth are held in engagement with the tooth portions of the toothed-member.

The above described conventional examples have shown the following problems.

In a case where a distance between axes of the pulleys, over which the endless toothed-belt is passed, is constant, when both end portions of the toothed-belt (a) are connected with each other to form the endless belt, both ends should be connected with each other in such a manner that some tension is given to the belt (a). But, in the above described connecting method, it has been very difficult to connect the end portions while the toothed-belt (a) is being pulled by the constant force. Furthermore since the length of the toothed-belt (a) can only be varied in steps corresponding to the pitch of the teeth, the tension is increased stepwise, so that a fine regulation of the tension has been impossible.

The present invention has been achieved in view of the above described disadvantages of the prior art, and it is an object of the present invention to provide a toothed-belt fixing mechanism capable of fixing one end portion or connecting both end portions of the toothed-belt in such a manner that an appointed tension can be given to the belt by a simple operation.

In order to achieve the above described object, the one end side of a toothed-belt is inserted between a toothed-pulley rotatable merely in one direction and a guide member which is so arranged that an appointed gap may be formed between the guide member and peripheral teeth portions of said toothed-pulley to engage teeth of said toothed-belt with said peripheral teeth portions of said toothed-pulley.

In the case where the other end of the toothed-belt is fixed and the portion of the guide member which faces to the toothed-belt is made smooth in the above described construction, the end portions of the toothed-belt are particularly advantageously fixed.

With the above described construction, if the one end of the toothed-belt which is fixed at its other end by suitable means is inserted between the toothed-pulley and the guide member, an appointed initial tension is applied to the belt by pulling the pointed end of the belt by means of a spring scale and the like, the toothed-pulley is not rotated in a opposite direction when the pulling force is cancelled, so that the toothed-belt is fixed at the position and an appointed strained condition is kept.

In addition, in the case that the toothed-belt expands, the tension of the belt can be regulated by merely pulling the end portion of the belt inserted between the toothed-pulley and the guide member.

In addition, in the case where said guide member comprises another toothed-pulley rotatable merely in a direction opposite to the direction of rotation of said toothed-pulley in the above described construction, both pulleys are pivoted on one movable member so that an appointed gap may be formed between peripheral teeth portions of said both toothed-pulleys, and both end portions of a toothed-belt, which is passed over a plurality of pulleys different from the above pulleys, are inserted between said both toothed-pulleys under the condition that they sit back to back to engage teeth of said belt with the peripheral teeth portions of said both toothed-pulleys.

In this case, the both end portions of the tooth-belt can be connected with each other to form an endless belt.

With the above described construction, both end portions of the toothed-belt are inserted between the toothed-pulleys from the direction, in which said toothed-pulleys can be rotated, under the condition that both end portions of the toothed-belt sit back to back and pointed ends of said both end portions of the toothed-belt are for example pulled through a spring scale to give the appointed tension to the belt. Upon stopping to pull under this condition, the toothed-pulleys on both sides can not be rotated in the respective opposite directions, so that both end portions of the toothed-belt are fixed at those positions to be connected with each other thereby forming the endless belt and maintaining the appointed strained condition.

In addition, in the case where the toothed-belt expands, the tension of the belt can be regulated by merely pulling the end portions of the belt inserted between both toothed-pulleys.

Figs. 1 to 5 show preferred embodiments in which the mechanism according to the invention is used for fixing one end portion of the belt.

Fig. 1 is an enlarged sectional view showing principal parts of a toothed-belt fixing mechanism according to the present invention ;

Fig. 2 is a rough sectional view showing an optical system travel type copying machine ; and

Fig. 3 is a perspective view showing principal parts of the above described optical system travel type copying machine.

Fig. 4 is a rough side view showing principal parts in another preferred embodiment of the present invention ;

Fig. 5 is an enlarged sectional view showing principal parts of a toothed-belt fixing mechanism in another preferred embodiment according to the present invention.

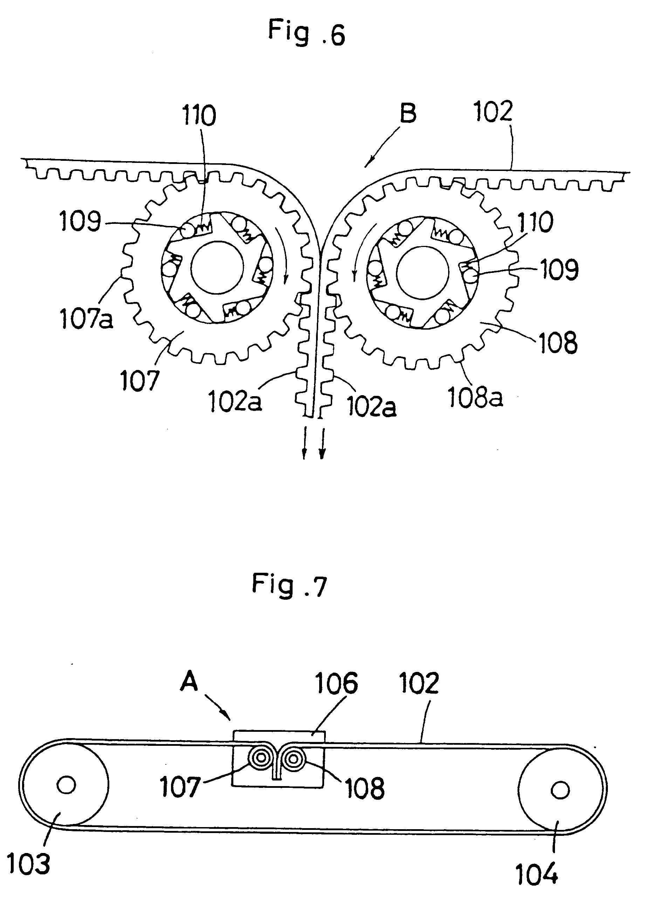

In addition, Figs. 6 to 8 show a preferred embodiment in which the present invention is applied to the case where both end portions of the belt are connected with each other to form an endless belt.

Fig. 6 is an enlarged sectional view showing principal parts in a toothed-belt connecting mechanism according to the present invention

Fig. 7 is a rough plan view showing a toothed-belt connecting mechanism ; and

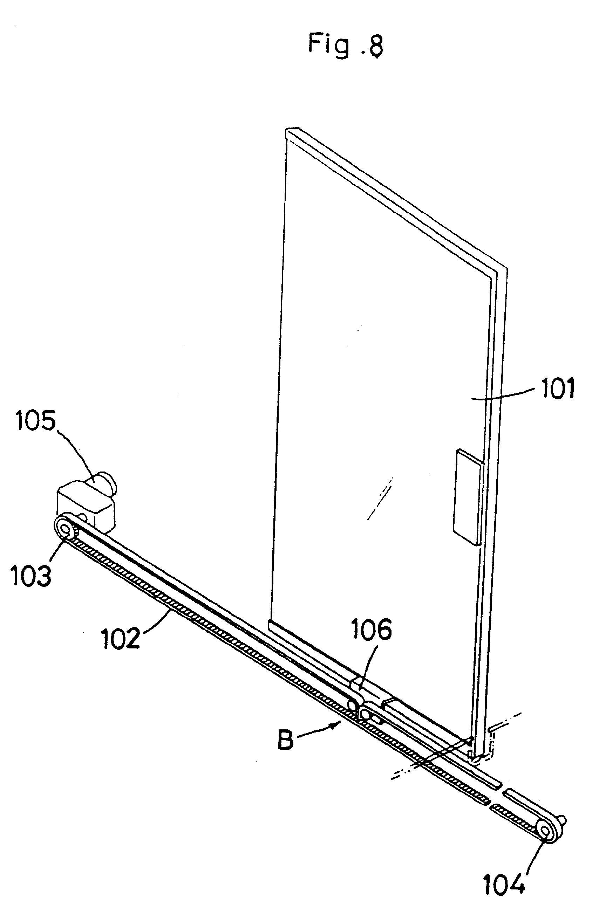

Fig. 8 is a perspective view showing principal parts in a driving apparatus of an automatic door to which the toothed-belt connecting mechanism is applied.

Fig. 9 and 10 are diagrams showing conventional fixing mechanisms, respectively.

The preferred embodiments of the present invention are below described with reference to the drawings.

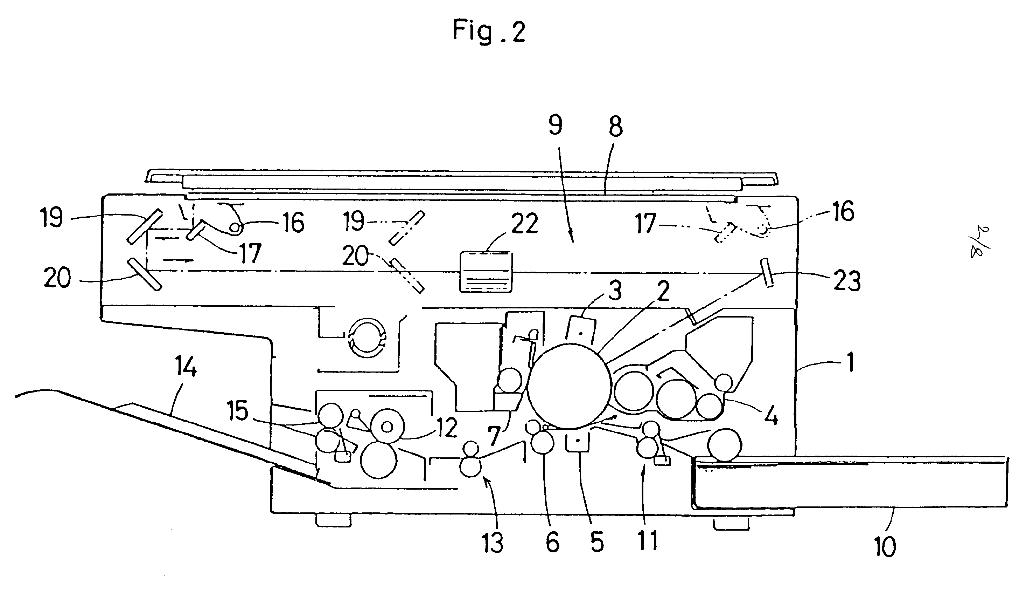

Fig. 2 shows an optical system travel type copying machine in which the toothed-belt fixing mechanism according to the present invention is applied as an optical system driving apparatus. Said copying machine comprises a drum photoreceptor 2 supported on a body 1 of the copying machine, a charging apparatus 3, a developing apparatus 4, a transferring apparatus 5, a paper-separating apparatus 6, a cleaning apparatus 7 for removing a residual toner from the photoreceptor 2, an optical system travel type exposure apparatus 9 provided in a space below a manuscript table 8, a paper supply and transfer apparatus 11 for transferring papers housed in a cassette-case 10 to said transferring apparatus 5, an discharge paper-transferring apparatus 13 for transferring the separated papers to a fixing apparatus 12, a pair of paper-discharge rollers 15 for discharging the papers to a tray 14 after the image has been fixed, and the like.

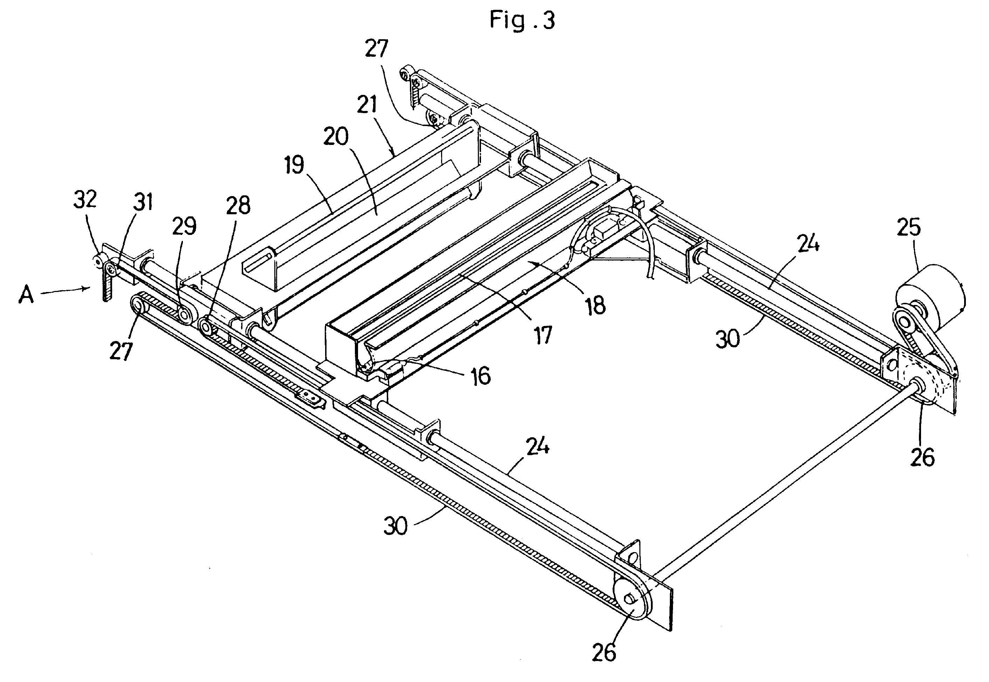

Said optical system travel type exposure apparatus 9 comprises a first optical traveller 18 provided with a light source 16 and a first mirror 17, a second optical traveller 21 provided with a second mirror 19 and a third mirror 20, an image-forming lens 22, a fourth mirror 23 and the like so that the first optical traveller 18 may be reciprocated at a speed 2 times that of the second optical traveller 21, as shown in Figs. 2 and 3.

The construction of the optical system driving apparatus for reciprocating the first optical traveller 18 at a speed 2 times that of the second optical traveller 21 is as follows :

As shown in Fig. 3, a pair of front and and rear guide rods 24 are disposed in parallel in a space above said body 1 of the copying machine along the moving direction of the optical system so that both end sides of the first optical traveller 18 and both end sides of the second optical traveller 21 may be slidably supported by said guide rods 24, 24, respectively.

A pair of driving pulleys 26, 26 provided with teeth formed on a peripheral surface thereof and driven by a motor 25 and passive pulleys 27, 27 having a flat peripheral surface are fixedly pivoted on appointed positions of said body 1 of the copying machine. Two movable pulleys 28, 29 provided with teeth formed on the peripheral surfaces thereof rotatably mounted on each end side of the second optical traveller 21.

A pair of front and rear toothed-belts 30 fixedly mounted on said body 1 of the copying machine at one end thereof are respectively wound around the movable pulley 28, the driving pulley 26, the passive pulley 27 and the movable pulley 29 in this order, the other end portion of the respective toothed-belts 30 being fixedly mounted on the body 1 of the copying machine, and both end sides of the first optical traveller 18 being connected with said toothed-belts 30, 30 at a position between said movable pulley 28 and said driving pulley 26.

One end side of said respective toothed-belts 30 is conveniently put between the plates and fixed by the screws and the like, but the other end side is fixed by means of the following toothed-belt fixing mechanism A.

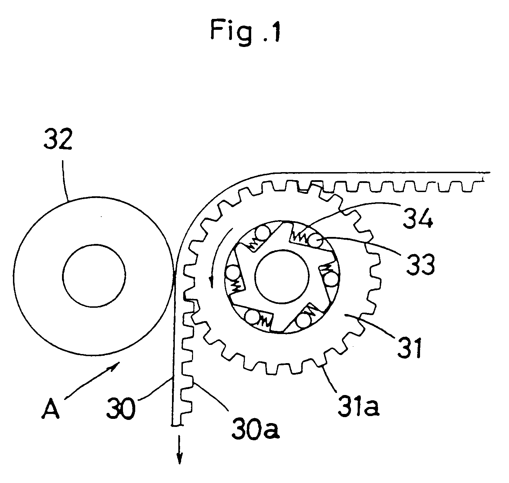

The toothed-belt fixing mechanism A, as shown in Fig. 1, comprises a toothed-pulley 31 rotatable merely in one direction (shown by an arrow) and a guide member 32 composed of a roll rotatable around an axis shaft line parallel to said toothed-pulley 31 and having a smooth peripheral surface so that an appointed gap may be formed between a peripheral teeth portion 31a of said toothed-pulley 31 and the peripheral surface of the guide member 32. Said other end side of said toothed-belt 30 may be inserted between both members 31, 32 from the direction in which the toothed-pulley 31 can be rotated, to engage teeth 30a of said toothed-belt 30 with the peripheral teeth portion 31a of said toothed-pulley 31. Said gap between the peripheral teeth portion 31a of the toothed-pulley 31 and the peripheral surface of the guide member 32 is so dimensioned that the rear surface of the toothed-belt 30 may be adhered to or engage the peripheral surface of the guide member 32, or, even though a gap is formed between the guide member and the back of the belt, the width of the gap may be less than the height of the teeth of the toothed-belt 30 under the condition that the toothed-belt 30 is inserted into the gap.

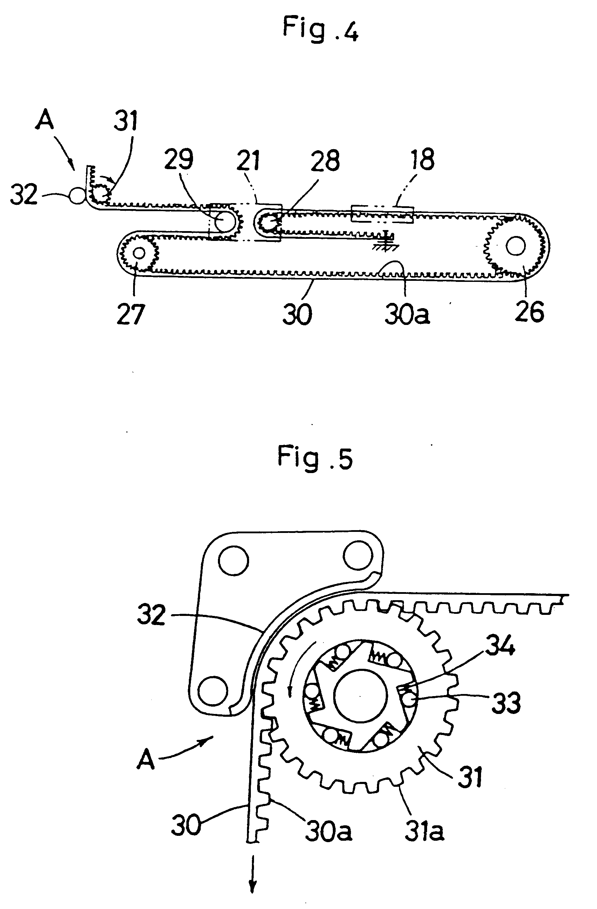

In addition, although not shown, the above described toothed-belt fixing mechanism A may be provided on both end sides of the respective toothed-belts 30. Furthermore, the respective toothed-belts 30, as shown, have such a construction that two pieces are connected with each other with opposite orientations at a central portion in the longitudinal direction. In short, the teeth 30a formed on one side of the belt are engaged wit the teeth of the two movable pulleys 28, 29 provided in parallel at the second optical traveller 21. However, in the case where the passive pulley 27 is toothed and one of the movable pulleys 29 has a smooth peripheral surface, as shown in Fig. 4, it is unnecessary to invert the orientation of the toothed-belt 30 at the central portion. Accordingly, it is unnecessary to use two pieces of toothed-belt connected to each other.

Besides, although a stepless one-way clutch provided with steel balls 33 and springs 34 pressing said steel balls 33 between flat inner surfaces of outer rims and inclined surfaces of inner rims, as shown in Fig. 1, is used as the means for rotating the toothed-pulley 31 merely in one direction (shown by an arrow) in the above described respective preferred embodiments, a ratchet-type one-way clutch using ratchet pawls in place of the steel balls 33 may be used. In this case, it is desired that the pitch of gears on the inner surfaces of the outer rims, with which the ratchet pawls are engaged, is reduced as far as possible so that the quantity of the belt moved by the rotation of the toothed-pulley 31 per one pitch may be less than the pitch of the teeth 30a of the toothed-belt 30.

A plate-like guide member as shown in Fig. 5 may be used instead of said guide member 32 composed of a roll.

With the above described construction, the toothed-belt is fixed at one end side by suitable means, and the other end side can be fixed simply by inserting it between the toothed-pulley and the guide member from the direction, in which the toothed-pulley can rotated, and by pulling the pointed end of the belt. In addition, the accurate initial tension can be given to the belt by pulling the pointed end portion of the belt inserted between the toothed-pulley and the guide member by means of a spring scale. In particular, the fine regulation of the tension is possible by using the stepless one-way clutch or the ratchet-type one-way clutch having a reduced pitch of gears as the means for permitting rotation of the toothed-pulley merely in one direction.

In addition, in the case where the toothed-belt expands in the use, the tension can be regulated by merely pulling the pointed end portion of the belt inserted between the toothed-pulley and the guide member.

The preferred embodiment in which the present invention is applied to the case where both end portions of the belt are connected with each other to form an endless belt is below described with reference to Figs. 6 to 8.

Fig. 8 shows a driving apparatus of an automatic door to which a toothed-belt fixing mechanism (B) according to the present invention is applied. Referring to the drawings, reference numeral 101 designates a door, reference numeral 102 designates an endless toothed-belt, and said endless toothed-belt 102 is passed over a pulley 103 on the driving side and a pulley 104 on the trailing side. Reference numeral 105 designates a motor for driving said pulley 103 on the driving side in the regular and reverse directions. Reference numeral 106 designates a movable member composing a part of said toothed-belt fixing mechanism (B), said door 101 being connected with said movable member 106.

Said toothed-belt fixing mechanism (B), as shown in Figs. 6 and 7 comprises a toothed-pulley 107 rotatable merely clockwise and a toothed-pulley 108 rotatable merely counterclockwise, both toothed-pulleys being mounted on said movable member 106 so that an appointed gap may be formed between a peripheral teeth portion 107a of said toothed-pulley 107 and a peripheral teeth portion 108a of said toothed-pulley 108, both end portions of the toothed-belt 102 passing over said pulley 103 on the driving side and said pulley 104 on the trailing side being inserted between said toothed-pulleys 107, 108 under the condition that they sit back to back to engage the teeth 102a of said belt 102 with the peripheral teeth portions 107a of said toothed-pulley 107 and the peripheral teeth portions 108a of said toothed-pulley 108. The gaps between the peripheral teeth portions 107a of said toothed-pulley 107 and the peripheral teeth portions 108a of said toothed-pulley 108 are so dimensioned that the rear surfaces of the toothed-belts 102 which are inserted back to back, may be adhered to each other, or, even though a gap is produced between the rear surfaces of the belts, the width of the gap may be less than the height of the teeth of said toothed-belt 102.

In addition, although a stepless one-way clutch provided with steel balls 109 and springs 110 pressing said steel balls 109 between flat inner surfaces of outer rims and inclined surfaces of inner rims, as shown in Fig. 6, is used as the means for rotating the toothed-pulleys 107, 108 merely in the directions shown by arrows (clockwise direction or counterclockwise direction) in this preferred embodiment, also a ratchet type one-way clutch using ratchet pawls in place of the steel balls 109 may be used. In this case, the fine regulation of the tension on the belt is possible by reducing a pitch of gears on the inner surface of the outer rim, with which the ratchet pawls are engaged, as far as possible so that the length of the belt moved by the rotation of the toothed-pulleys 107, 108 per one pitch may be less than the pitch of the teeth 102a of the toothed-belt 102.

In addition, although the present invention has been described with the driving apparatus of the automatic door as an example in the above described preferred embodiment, the toothed-belt fixing mechanism (B) according to the present invention can be applied to every apparatus, in which the endless toothed-belt is used to reciprocate the movable member, such as apparatus for driving a printing head of a printer, industrial sewing machine and apparatus for travelling and driving a car truck of a robot.

With the above described construction, both end portions of the toothed-belt can be connected to each other to form the endless belt by merely inserting both end portions of the toothed-belt between the toothed-pulleys from the direction, in which said toothed-pulleys can be rotated, under the condition that both end portions of the toothed-belt sit back to back, and pulling the pointed ends of the belt. Furthermore, the accurate tension can be given to the belt by pulling the pointed ends of the belt, which are inserted between the toothed-pulleys, by means of a spring scale. In particular, the fine regulation of the tension is possible by using the stepless one-way clutch or the ratchet type one-way clutch having the reduced gear pitch as means for permitting rotation of the toothed-pulleys merely in the appointed directions.

In addition, in the case where the toothed-belt expands, the tension can be regulated by merely pulling the pointed ends of the belt inserted between the toothed-pulleys.

## Claims

1. A toothed-belt fixing mechanism (A ; B) for an end side of a toothed belt (30 ; 102), whereby said end side is inserted between a toothed member (31 ; 108) and a guide member (32 ; 107), which is so arranged that an appointed gap may be formed between said guide member (32 ; 107) and peripheral teeth portions (31a ; 108a) of said toothed member (31, 108), to engage teeth (30a ; 102a) of said toothed-belt (30 ; 102) with said peripheral teeth portions of said toothed member (31, 108), characterized in that said toothed member (31 ; 108) is a toothed pulley rotatable merely in one direction.

2. A toothed-belt fixing mechanism as claimed in claim 1, wherein also the other end side of the toothed-belt is fixed, and wherein the portion of the guide member (32) which faces toward the toothed-belt (30) is made smooth.

3. A toothed-belt fixing mechanism (B) as claimed in claim 1, wherein said guide member comprises another toothed-pulley (107) rotatable merely in a direction opposite to the direction of rotation of said first tooth-pulley (108), and both pulleys are mounted on a common movable member (106) so that said appointed gap may be formed between the peripheral teeth portions of said toothed-pulleys, and both end portions of the toothed-belt (102), which is passed over a plurality of pulleys other than said pulleys (107, 108) of said fixing mechanism, are inserted between the two pulleys of the fixing mechanism in such a manner that they are positioned back-to-back and the teeth (102) thereof are engaged with the peripheral teeth portions (107a, 108a) of the toothed-pulleys.

4. A toothed-belt fixing mechanism as claimed in claim 2, wherein said guide member (32) is plate-like.

5. A toothed-belt fixing mechanism as claimed in any of the preceding claims, wherein a ball-type stepless one-way clutch (33, 34 ; 109, 110) is prodded as means of permitting rotation of said toothed-pulley (31 ; 107 ; 108) merely in one direction.

6. A toothed-belt fixing mechanism as claimed in any of the claims 1 to 4, wherein ratchet-type one-way clutch is provided as means for permitting rotation of said toothed-pulley (31 ; 107 ; 108) merely in one direction, the pitch of a ratchet gear of said clutch being smaller than the pitch of the teeth (30a ; 102a) of the toothed-belt.

## Patentansprüche

1. Befestigungsvorrichtung (A ; B) für ein Ende eines Zahnriemens (30 ; 102), bei der das Ende zwischen einem gezahnten Bauteil (31 ; 108) und einem Führungsteil (32 ; 107) eingeführt wird, wobei das Führungsteil so angeordnet ist, daß ein bestimmter Zwischenraum zwischen dem Führungsteil (32 ; 107) und den Umfangs-Zahnbereichen (31a ; 108a) des gezahnten Bauteils (31 ; 108) gebildet werden kann, um Zähne (30a ; 102a) des Zahnriemens (30 ; 102) mit den Umfangs-Zahnbereichen des gezahnten Bauteils (31 ; 108) in Eingriff zu bringen, dadurch **gekennzeichnet,** daß das gezahnte Bauteil (31 ; 108) eine Zahnriemenscheibe ist, die nur in einer Richtung drehbar ist.

2. Befestigungsvorrichtung für Zahnriemen nach Anspruch 1, bei der auch das andere Ende des Zahnriemens befestigt ist und bei der der Abschnitt des Führungsteils (32), der dem Zahnriemen (30) zugewandt ist, glatt ausgebildet ist.

3. Befestigungsvorrichtung (B) für Zahnriemen nach Anspruch 1, bei der das Führungsteil eine weitere Zahnriemenscheibe (107) aufweist, die nur in einer der Drehrichtung der ersten Zahnriemenscheibe (108) entgegengesetzten Richtung drehbar ist, und beide Riemenscheiben so auf einem gemeinsamen beweglichen Teil (106) montiert sind, daß ein bestimmter Zwischenraum zwischen den Umfangs-Zahnbereichen der Zahnriemenscheiben gebildet werden kann und beide Enden des Zahnriemens (102), der über mehrere von den Riemenscheiben (107, 108) der Befestigungsvorrichtung verschiedene Riemenscheiben läuft, zwischen den beiden Riemenscheiben der Befestigungsvorrichtung in der Weise eingefügt sind, daß sie Rücken an Rücken liegen und ihre Zähne (102) mit den Umfangs-Zahnbereichen (107a, 108a) der Zahnriemenscheiben in Eingriff stehen.

4. Befestigungsvorrichtung für Zahnriemen nach Anspruch 2, bei der das Führungsteil (32) plattenförmig ist.

5. Befestigungsvorrichtung für Zahnriemen nach einem der vorstehenden Ansprüche, bei der eine stufenlose Kugel-Einwegkupplung (33, 34 ; 109, 110) als Mittel vorgesehen ist, das die Drehung der Zahnriemenscheibe (31 ; 107 ; 108) nur in einer Richtung gestattet.

6. Befestigungsvorrichtung für Zahnriemen nach einem der Ansprüche 1 bis 4, bei der eine Klinken-Einwegkupplung als Mittel vorgesehen ist, das die Drehung der Zahnriemenscheibe (31 ; 107 ; 108) in nur einer Richtung gestattet, und bei der die Teilung eines Klinkenrades dieser Kupplung kleiner ist als die Teilung der Zahne (30a ; 102a) des Zahnriemens.

## Revendications

1. Dispositif de fixation de courroie crantée (A ; B) pour un côté d'extrémité d'une courroie crantée (30 ; 102), dans lequel ledit côté d'extrémité est inséré entre un organe denté (31 ; 108) et un organe de guidage (32 ; 107), qui est agencé de manière qu'un interstice prédéterminé puisse être formé entre ledit organe de guidage (32 ; 107) et des portions de dents périphériques (31a ; 108a) dudit organe denté (31 ; 108), pour venir en prise avec les crans (30a ; 102a) de ladite courroie crantée (30 ; 102) avec lesdites portions de dents périphériques dudit organe cranté (31 ; 108), caractérisé en ce que ledit organe denté (31, 108) est une poulie dentée pouvant tourner seulement dans un sens.

2. Dispositif de fixation de courroie crantée selon la revendication 1, dans lequel également l'autre côté d'extrémité de la courroie crantée est fixe, et dans lequel la portion de l'organe de guidage (32) qui est tournée vers la courroie crantée (30) est lisse.

3. Dispositif de fixation de courroie crantée (B) selon la revendication 1, dans lequel ledit organe de guidage comprend une autre poulie dentée (107) pouvant tourner seulement dans le sens opposé au sens de rotation de ladite première poulie dentée (108), et les deux poulies sont montées sur un organe mobile commun (106) de manière que ledit interstice prédéterminé puisse être formé entre les portions de dents périphériques desdites poulies dentées, et les deux portions d'extrémité de la courroie crantée (102), qui passe sur plusieurs poulies autres que lesdites poulies (107, 108) dudit dispositif de fixation, sont insérées entre les deux poulies du dispositif de fixation de manière qu'elles soient positionnées dos contre dos et que leurs crans (102) soient en prise avec les portions de dents périphériques (107a, 108a) des poulies dentées.

4. Dispositif de fixation de courroie crantée selon la revendication 2, dans lequel ledit organe de guidage (32) est en forme de plaque.

5. Dispositif de fixation de courroie crantée selon l'une quelconque des revendications précédentes, dans lequel un embrayage unidirectionnel continu du type à billes (33, 34 ; 109, 110) est prévu comme moyen pour permettre la rotation de ladite poulie dentée (31 ; 107 ; 108) simplement dans un sens.

6. Dispositif de fixation de courroie crantée selon l'une quelconque des revendications 1 à 4, dans lequel un embrayage unidirectionnel du type à rochet est prévu comme moyen pour permettre la rotation de ladite poulie dentée (31 ; 107 ; 108) simplement dans un sens, le pas d'un pignon à rochet dudit embrayage étant plus petit que le pas des crans (30a ; 102a) de la courroie crantée.

## Fig .1

Fig.2

Fig. 3

EP 0 367 118 B1

Fig .4

Fig .5

## Fig .6

## Fig .7

# Fig .8

Fig.9

Fig .10